# EUROPEAN PATENT APPLICATION

(11) **EP 2 641 517 A1**
(43) Date of publication of application: **25.09.2013**
(21) Application number: 13155652.4
(22) Date of filing: 18.02.2013
(51) Int. Cl.: A47J 37/07

(54) **Barbecue fed with gaseous or solid fuels and relative support structure**

(30) Priority: 21.03.2012 IT PN20120014
(71) Applicant: MCZ Group S.p.A., 33074 Fontanafredda (PN) (IT)
(72) Inventor: Mezzalira, Claudio, 31030 Altivole (TV) (IT); Zanette, Giacomo, 33077 Sacile (PN) (IT)
(74) Representative: Gonella, Mario

(57) **Abstract**

The present invention refers to a barbecue (1) that can alternatively be fed either with a gaseous fuel or a solid fuel. The barbecue (1) comprises a module (3) for gas-fired cooking and a vessel (6), and envisions a first operating mode wherein the heat necessary to cook the food is supplied by the combustion of said gaseous fuel, and a second operating mode, wherein the heat for cooking the food is provided by the combustion of said solid fuel. In particular, in said first operating mode, said vessel (6) is positioned below said module (3) to collect and contain any fat that percolates from the food, and in said second operating mode said vessel (6) is positioned above said module (3) to contain said solid fuel. The present invention also concerns a support structure (10) for said barbecue (1).

## Description

### TECHNICAL FIELD OF INVENTION

The present invention refers to a barbecue that can be used either with gaseous fuels or solid fuels, for barbecuing or grilling food. The present invention also refers to a support frame for said barbecue.

### BACKGROUND OF THE INVENTION

The cooking method that can be carried out on a barbecue is a type of cooking over direct heat at high temperature; the desired result is to have a toasted and crispy consistency on the external part of the food, while perfectly cooking it on the inside.

There are two main categories of barbecues available on the market that differ on the basis of the type of fuel used, that is, gaseous type, in particular methane or propane, or solid type, generally charcoal briquettes or wood. Conventionally, gas-fired barbecues are more appreciated as they reach the desired temperature rapidly and provide a high degree of heat exchange. Further, unlike the charcoal-fired barbecues, they can be immediately used, as they do not require fuel preparation times.

However, charcoal-fired barbecues have the advantage of not requiring a cumbersome external source of fuel, such as a propane gas bottle. Furthermore, many users maintain that food cooked over charcoal or wood is better to the taste and is more aromatic than the food cooked with gas.

Barbecues that can be both gas-fired or wood-fired have recently been proposed. For example, American Patent US4819614 discloses a barbecue that allows the use of charcoal in a gas-fired barbecue. For the operation with charcoal, said patent considers the use of a vessel to hold the charcoal in an opening formed in the body of the barbecue above the gas burner. On the other hand, cooking with gas requires the rotated insertion of said vessel, thus with the cavity turned downward; in this manner, however, cooking cannot be carried out on the grille but only on the plate, since the flames from combustion do not lick the food directly, nor are they in the immediate vicinity of the food, but the heat is transmitted to the food through the bottom of the vessel.

On the other hand, American Patent US6173644 discloses a gas-fired barbecue that is convertible into a charcoal-fired barbecue through the removable positioning of a charcoal-holding accessory vessel over the burner. However, when the barbecue is gas fired, the charcoal-holding vessel has no purpose and must be placed elsewhere.

### SUMMARY OF THE INVENTION

The main objective of the subject matter of the present invention is to provide a grilling or broiling barbecue that can alternatively be fed with a gaseous or solid fuel and that is practical and more versatile than the known barbecues having the same functionalities.

In the scope of the above objective, one purpose of the present invention is to provide a barbecue fed with a gaseous fuel or a solid fuel and in which, in both versions, the dispersion of the grease melted from the food during the cooking process is avoided.

Another objective is to provide a barbecue that can be made with the usual known systems, machinery and equipment.

The above objective and purposes, and others that will become more evident later, are achieved by a barbecue that can be fed alternatively with a gaseous fuel or a solid fuel as defined in claim 1 and by a relative support frame as defined in claim 9.

### BRIEF DESCRIPTION OF THE FIGURES

Advantages and characteristics of the invention will become evident from the following description, given by way of non-limiting example, with reference to the accompanying figures, wherein:
- Fig. 1 is a perspective view of a support frame on which is installed a barbecue according to the present invention;
- Figs. 2A and 2B illustrate respectively a barbecue according to the present invention in an exploded view and in an assembled perspective view in a first operating mode;
- Fig. 3 illustrates a variant embodiment of the barbecue of the previous figures, and
- Figs. 4A and 4B are perspective views of an assembled barbecue according to the present invention in a second operating mode.

### DETAILED DESCRIPTION OF THE EMBODIMENTS OF THE INVENTION

The directional terms that will be used to describe the present invention, such as "above, below, vertical, horizontal, lower, higher", as well as any other similar directional term, must be interpreted with reference to a barbecue 1 when in use.

A barbecue 1 of the present invention can be fed alternatively with gaseous fuels, for example propane gas or methane, or with solid fuels, preferably in the form of briquettes of, for example, charcoal. In fact, according to a specific characteristic of the present invention, said barbecue 1 is intended for a first mode of operation, in which the heat necessary to prepare the food is supplied by the combustion of a gaseous fuel, and a second operating mode, in which the heat for preparing the food is provided by the combustion of a solid fuel.

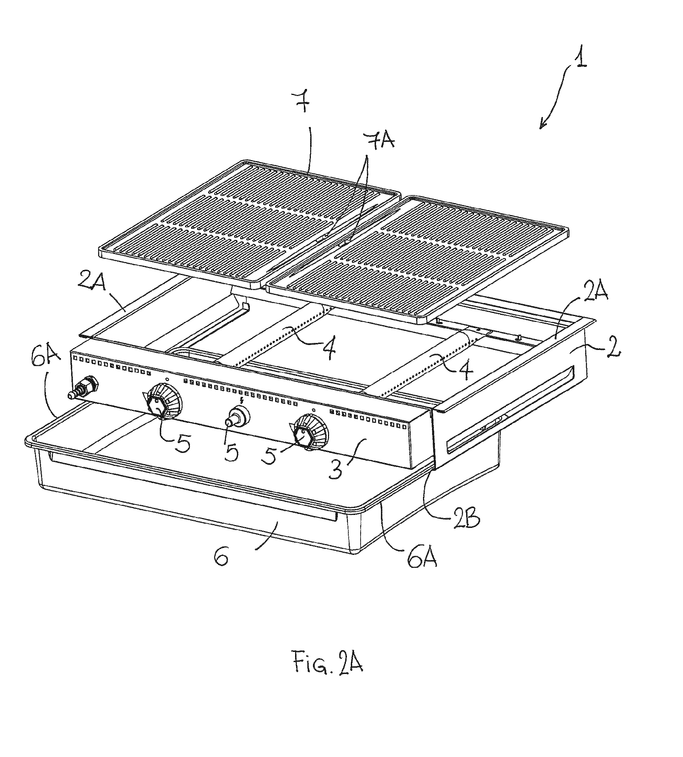

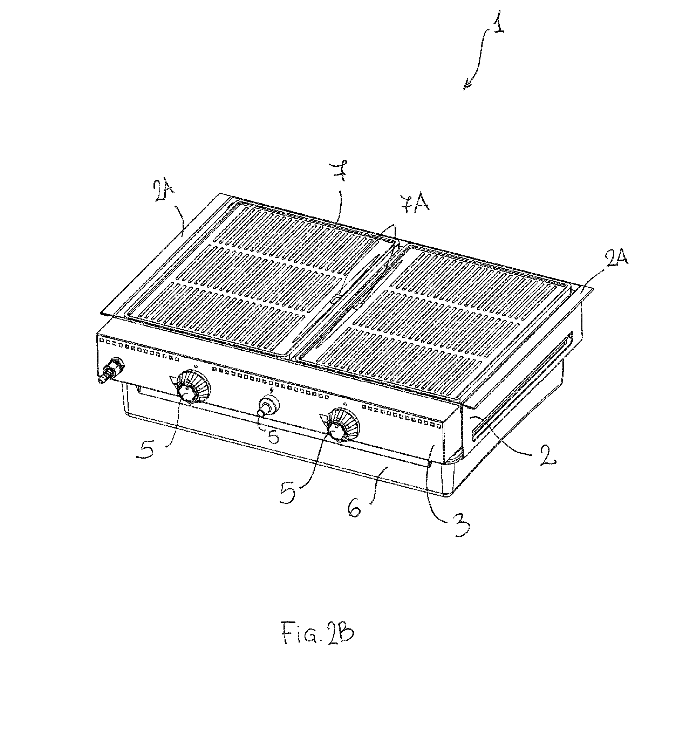

With reference to figures 2A and 2B, said barbecue 1 comprises a support frame 2, to which can be associated a module 3 for cooking with the gaseous fuel, and a vessel 6 that, as will be explained in detail later, has different functions based on the operating mode of the barbecue 1, as it can be removably placed in different positions relative to said module 3. Food support means 7, such as grille or plate surfaces on which the food to be cooked is placed, are also provided.

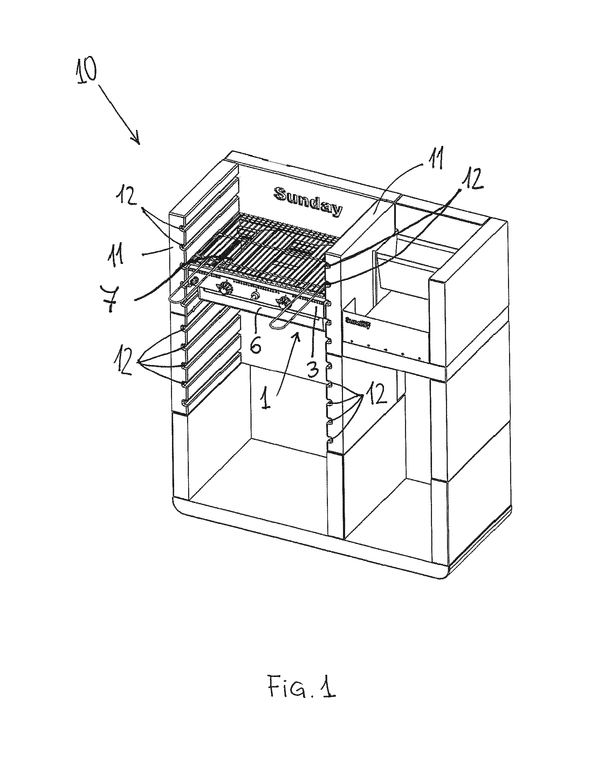

Preferably, said support frame 2 comprises a metal framework having an open side so as to form a C shape, if necessary provided with coupling means 2A suitable to allow said barbecue 1 to be placed on a support structure 10, for example one of cement or masonry construction, as shown in figure 1.

The module 3 for barbecuing with gaseous fuel includes one or more burners 4 operating conventionally and connected in a known manner to a source of said gaseous fuel (not shown). Said burners 4 are operatively connected to a front element, preferably adapted to be housed at the open side of said framework, on which are provided relative control means 5, such as knobs, that make it possible to adjust the flow of the gaseous fuel and thus the intensity of the flame.

As is obvious to an expert in the field, a module 3 can be provided with numerous other known means and devices that, as they are not directly relevant for the purposes of the invention, will not be described in detail.

As already mentioned, the barbecue 1 also comprises a vessel 6 provided with engaging means 6A that adapt it to be removably placed in different positions with respect to said module 3 to perform different functions.

As can be seen in figures 2A and 2B, when said barbecue 1 is engaged according to said first operating mode, in which a gaseous fuel is used to cook the food, said support means 7 are placed directly on said support frame 2, at the upper edges of said framework and above the module 3; in this situation, said vessel 6 is advantageously arranged below said module 3 to capture and contain the melted fat that drips from the food arranged on said support means 7 during the cooking process.

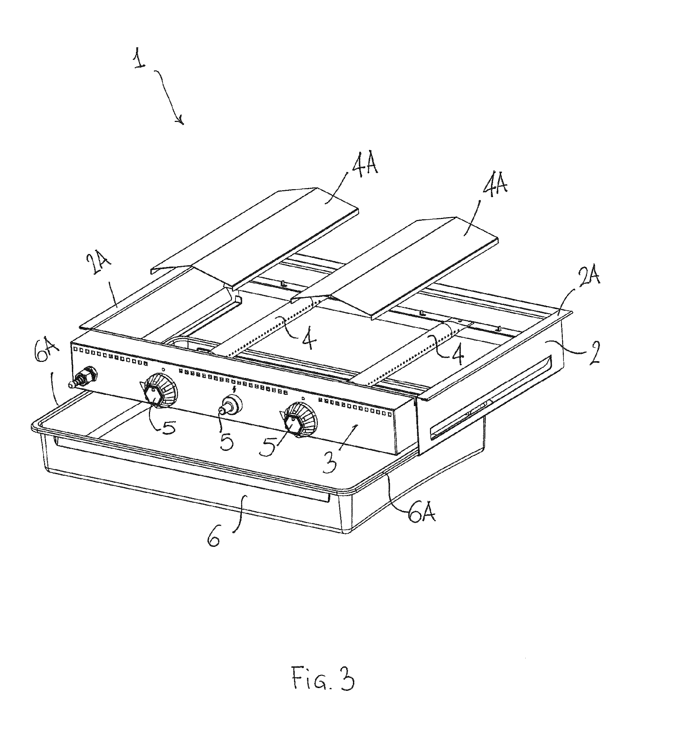

In fact, if said support means 7 are in the form of grid surfaces, the fat that melts off the food percolates diffusely through the mesh of the grid, and can be collected in the underlying vessel 6; moreover, as can be seen in figure 3, in order to keep the dripping fat from falling on the burners 4, causing thereby unpleasant odours and the risk of malfunctions due to clogging, suitable deflectors 4A can be arranged in position over said burners 4, to cover and protect the same.

Further, even in the case of said support means 7 comprising solid surfaces, for example for griddling food, said surfaces are preferably arranged so as to form inclined planes, in the most recessed part of which there is at least one opening 7A for draining off the melted fat, which in fact percolates toward the underlying vessel 6. Clearly, said openings 7A are arranged so as to direct said melted fat toward said vessel 6, while preventing it from dripping onto any of the burners 4.

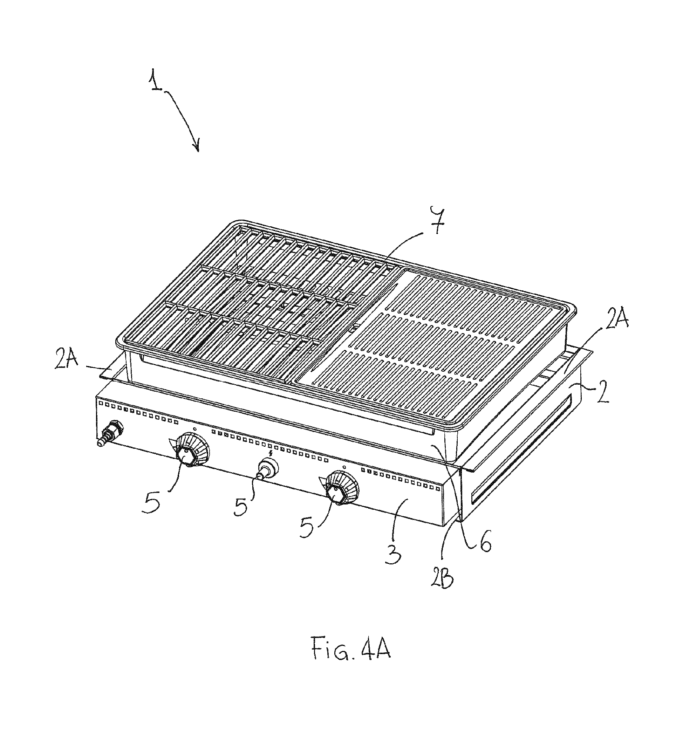

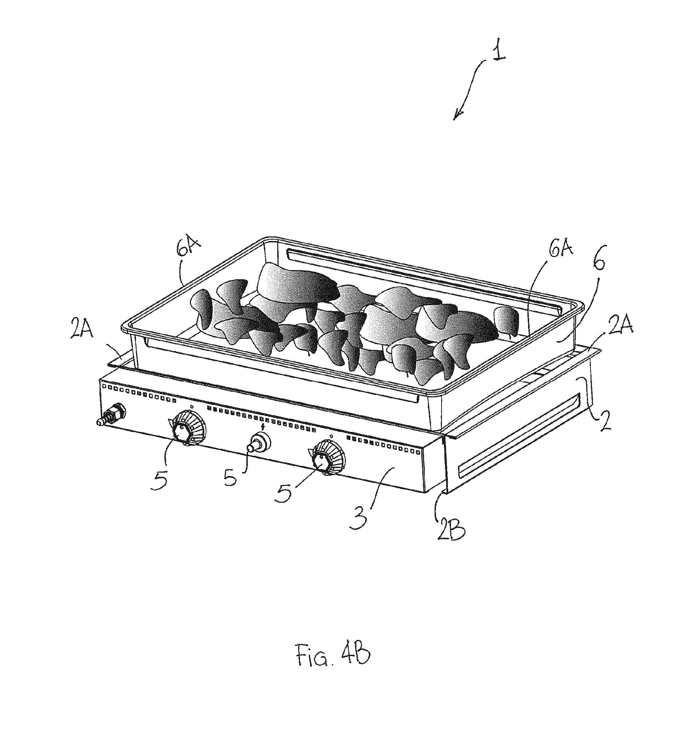

Instead, with reference to figures 4A and 4B, when said barbecue 1 is used in said second operating mode, said vessel 6 is positioned above said module 3, with the task of containing the solid fuel. In this case, therefore, said support means 7 are arranged so as to rest directly on the upper edges 6A of said vessel 6.

The positioning of the vessel 6 below said module 3 in said first operating mode of the barbecue 1 can be achieved by slidably engaging said engaging means 6A, conveniently formed by the upper edges of said vessel 6 bent outwardly, with counter-shaped holding means 2B provided on the frame 2, advantageously formed by the lower edges of the side walls of said framework bent inwardly so as to define first guide edges.

Correspondingly, in said second operating mode, the vessel 6 can be placed on the module 3 so as to rest on the top edges of the framework forming the frame 2, or if necessary also on the burners 4.

The barbecue 1 of the present invention can also be mounted on a support structure 10, for example one of cement or masonry construction, as shown in figure 1. In particular, said support structure 10 includes at least one pair of facing walls 11, each provided with a plurality of grooves 12, preferably horizontal and arranged parallel to each other.

A first pair of said grooves 12 set respectively facing each other is suitable to slidably cooperate with said coupling means 2A provided on the support frame 2, preferably formed by the upper edges of the side walls of the framework bent outwardly so as to define second guide edges, to place the barbecue 1 removably on said structure 10 at a desired height.

The vessel 6 can thus be placed in different positions with respect to the module 3 as previously explained. Alternatively, for both operating modes, said vessel 6 can be positioned by using the plurality of grooves 12 provided on said facing walls 11.

In fact, it is possible to select from said plurality of grooves 12 at least one second pair of respectively facing grooves, arranged below said first groove, and at least one third pair of respectively facing grooves, arranged above said first pair, suitable to slidably cooperate with the engaging means 6A of said vessel 6 so as to position it respectively below and above said module 3 and to consequently use the barbecue 1 in said first and said second operating mode respectively.

In conclusion, from the above it is evident how a barbecue 1 according to the present invention achieves the initially anticipated purposes and advantages. In fact, a barbecue is provided that can be fed alternatively with a gaseous or a solid fuel, that is structurally simple, of contained dimensions, and that is extremely practical and intuitive to use.

Further, a barbecue 1 according to the present invention can prevent, in both operating modes, the dispersion of any fat trickling from the food being cooked, an undesirable situation, especially when the barbecue is used close to one's home or when the barbecue 1 is mounted on a brick or stone support structure 10. Naturally, the present invention can be adapted to numerous applications, modifications or variants without thereby departing from the scope of patent protection, as defined by the accompanying claims.

In addition, the materials and equipment used to achieve the present invention, as well as the shapes and dimensions of the individual components, can be the most suitable for the specific requirements.

## Claims

1. Barbecue (1) adapted to be alternatively fed with a gaseous fuel or a solid fuel, said barbecue (1) comprising a support frame (2), a module (3) provided with one or more burners (4) being associated to said support frame (2), and a vessel (6), said barbecue (1) being operable in a first operating mode, wherein the heat for the preparation of food is provided by the combustion of said gaseous fuel operated by said one or more burners (4), and in a second operating mode, wherein the heat for the preparation of food is provided by the combustion of said solid fuel,
**characterized in that** in said first operating mode said vessel (6) is adapted to be arranged below said module (3) to collect and contain fats percolating from the food, and in said second operating mode said vessel (6) is adapted to be arranged above said module (3) for receiving said solid fuel.

2. Barbecue (1) according to claim 1, wherein said support frame (2) comprises a framework having an open side and provided with holding means (2B) slidably engageable with corresponding engaging means (6A) provided on said vessel (6) to hold said vessel (6) in said first operating mode.

3. Barbecue (1) according to claim 2, wherein said holding means (2B) are formed by the lower edges of the side walls of said framework folded so as to define guide edges, and said engaging means (6A) are formed by the upper edges of said vessel (6).

4. Barbecue (1) according to claim 2 or 3, wherein said module (3) further comprises a front element on which said one or more burners (4) are mounted, said front element being provided with control means (5) operatively connected to said one or more burners (4), said front element being adapted to be housed at said open side of said framework.

5. Barbecue (1) according to any of the preceding claims, further comprising food support means (7) for the food to be prepared, said food support means (7) comprising plate surface and/or a grill surface.

6. Barbecue (1) according to claim 5, wherein in said first operating mode said food support means (7) are directly placeable on said support frame (2) above said module (3), and in said second operating mode said food support means (7) are directly placeable on the upper edges (6A) of said vessel (6).

7. Barbecue (1) according to claim 5 or 6, wherein in said first mode suitable deflectors (4A) are provided on said one or more burners (4) when said food support means (7) comprise a grill surface.

8. Barbecue (1) according to any of the preceding claims, wherein said support frame (2) further comprises coupling means (2A) adapted to couple said support frame (2) to a support structure (10).

9. Support structure (10) for a barbecue (1) according to claim 1, comprising a first and a second facing walls (11), each provided with a plurality of grooves (12), a first pair of grooves respectively facing being adapted to cooperate with coupling means (2A) provided on said support frame (2) to arrange said barbecue (1) on said structure (10), **characterized in that** said structure (10) comprises at least a second pair of grooves respectively facing, arranged in use below said first pair of grooves and adapted to slidably cooperate with engaging means (6A) provided on said vessel (6) for locating said vessel (6) below said module (3) in said first operating mode, and at least a third pair of grooves respectively facing, arranged in use above said first pair of grooves and adapted to slidably cooperate with said engaging means (6A) for locating said vessel (6) above said module (3) in said second operating mode.
